# EUROPEAN PATENT APPLICATION

(11) **EP 4 596 799 A1**
(43) Date of publication of application: **06.08.2025**
(21) Application number: 25153239.6
(22) Date of filing: 22.01.2025
(51) Int. Cl.: E02F 9/08, E02F 9/20, B60K 1/04, B60L 53/16

(54) **WORK MACHINE**

(30) Priority: 02.02.2024 JP 2024014675
(71) Applicant: Yanmar Holdings Co., Ltd., Osaka-shi, Osaka (JP)
(72) Inventor: KITAHARA, Satoshi, Chikugo-shi (JP)
(74) Representative: Sekiguchi, Kazuya

(57) **Abstract**

[Problem]A work machine that can perform charging while an operator safely gets on and off a driving section.

[Solution]The work machine includes a connector connected to a cable for charging a battery unit for supplying electric power to an electric motor, a driving section that is disposed on a first side in a width direction, and a machine room that has an openable cover and that incorporates the connector disposed therein. The machine room is disposed at least in a portion adjacent to the driving section on a second side in the width direction.

## Description

### TECHNICAL FIELD

The present invention relates to a work machine.

### BACKGROUND ART

In general, an electric excavator including a charging port for supplying electric power to a battery is known.

For example, according to an electric excavator of Patent Document 1, a charging port is provided at a position, on a surface having a door of a cabin, which is lower than a bottom side portion of the door in an upper swivel body.

### PRIOR ART DOCUMENT

### PATENT DOCUMENT

Patent Document 1: Japanese Unexamined Patent Application Publication No. 2023-125756

### SUMMARY OF INVENTION

### TECHNICAL PROBLEM

In the configuration in Patent Document 1, a cable is located below a doorway (the door of the cabin) of a driving section when the cable is connected to the charging port to charge battery, and therefore, when an operator opens and closes the door of the cabin to get on and off during charging, an operator's foot may be caught by the cable. That is, the cable may hinder the operator from getting on and off.

The present invention has been made to solve the above-described problem, and an object of the present invention is to provide a work machine capable of performing charging while an operator safely gets on and off a driving section.

### SOLUTION TO PROBLEM

According to an aspect of the present invention, a work machine having connectors connected to cables for charging a battery unit for supplying electric power to an electric motor includes a driving section that is disposed on a first side in a width direction, and a machine room that has an openable cover and that incorporates the connectors. The machine room is at least disposed adjacent to the driving section on a second side in the width direction.

### ADVANTAGEOUS EFFECTS OF INVENTION

According to the configuration described above, charging can be performed while the operator safely gets on and off the driving section.

### BRIEF DESCRIPTION OF DRAWINGS

FIG. 1 is a side view illustrating a schematic configuration of a hydraulic excavator as an example of a work machine according to an embodiment of the present invention.
FIG. 2 is a block diagram schematically illustrating a configuration of an electrical system and a hydraulic system of the hydraulic excavator.
FIG. 3 is a perspective view of an upper swivel body of the hydraulic excavator.
FIG. 4 is a plan view schematically illustrating the upper swivel body.
FIG. 5 is a perspective view of the upper swivel body with a cover opened.
FIG. 6 is an enlarged perspective view of connectors disposed in a machine room of the hydraulic excavator.
FIG. 7 is a perspective view of a first connector connected to a first cable.
FIG. 8 is a perspective view of the upper swivel body with a cover closed viewed from a bottom.
FIG. 9 is a perspective view of a second connector before a second cable is connected.
FIG. 10 is a perspective view of the second connector connected to the second cable.
FIG. 11 is a side view schematically illustrating an internal configuration of the machine room.

### DESCRIPTION OF EMBODIMENTS

Embodiments of the present invention will be described below with reference to the accompanying drawings.

### 1. Work Machine

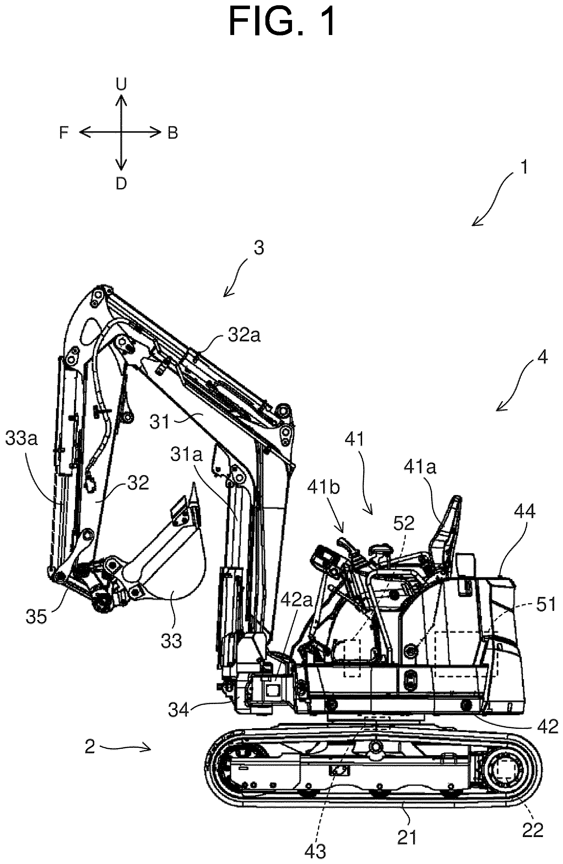

FIG. 1 is a side view illustrating a schematic configuration of a hydraulic excavator (electric excavator) 1 which is an example of an electric work machine of this embodiment. The hydraulic excavator 1 includes a lower traveling body 2, an operating machine 3, and an upper swivel body 4.

Here, directions are defined as follows. The direction in which an operator (pilot, or driver) seated in a driver's seat 41a of the upper swivel body 4 faces forward is defined as a front, and the opposite direction is defined as a back. Therefore, in a state in which the upper swivel body 4 does not swivel with respect to the lower traveling body 2 (turning angle 0°), a front-back direction of the upper swivel body 4 coincides with a direction in which the lower traveling body 2 moves forward and backward. Moreover, a left side as viewed from the operator seated in the driver's seat 41a is referred to as "left" and a right side as "right", respectively. Furthermore, a gravity direction perpendicular to the front-back direction and the left-right direction is defined as an up-down direction, an upstream side in the gravity direction is defined as "up", and a downstream side is defined as "down". In the drawings, the hydraulic excavator 1 is illustrated in a state in which the upper swivel body 4 does not swivel with respect to the lower traveling body 2. Moreover, in the drawings, "F" represents a front side, "B" for a rear side, "U" for an upper side, and "D" for a right side. Note that the right-left direction of the hydraulic excavator 1 or the upper swivel body 4 is also referred to as a width direction.

The lower traveling body 2 includes a pair of right and left crawlers 21 and a pair of right and left traveling motors 22. Each of the traveling motors 22 is a hydraulic motor. The right and left traveling motors 22 drive the right and left crawlers 21, respectively, so that the hydraulic excavator 1 can be moved forward and backward. Although the lower traveling body 2 further includes a blade for leveling the ground, and a blade cylinder for turning the blade in the up-down direction, these components are omitted for descriptive purpose in FIG. 1.

The operating machine 3 has a boom 31, an arm 32, and a bucket 33. The boom 31, the arm 32, and the bucket 33 are independently driven, thereby to make it possible to perform excavation work of earth, sand, and the like.

The boom 31, the arm 32, and the bucket 33 are respectively driven by a boom cylinder 31a, an arm cylinder 32a, and a bucket cylinder 33a. The boom cylinder 31a, the arm cylinder 32a, and the bucket cylinder 33a are constituted by hydraulic cylinders.

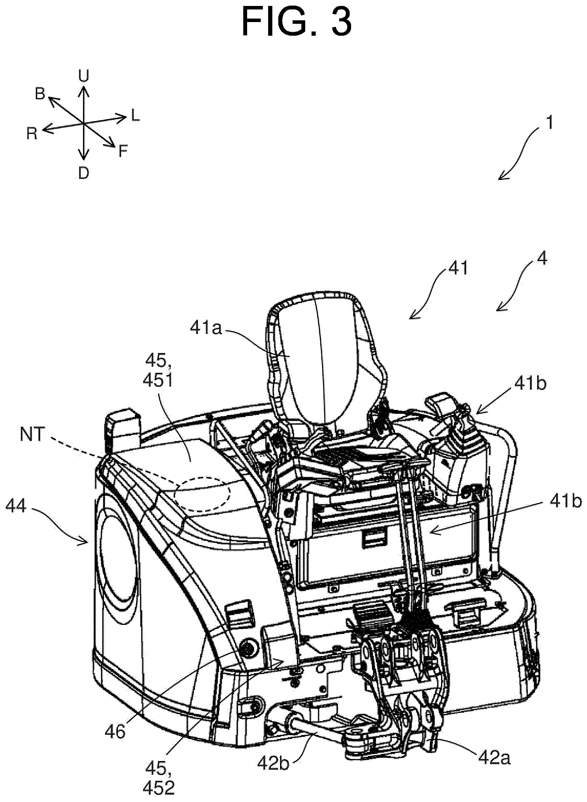

A base end of the boom 31, that is, an end of the boom 31, which is opposite to a side connected to the arm 32, is coupled to a distal end 42a of a swivel frame 42 in a swing available manner via a bracket 34. Specifically, the hydraulic excavator 1 of this embodiment has a boom swing function in which the boom 31 swings to the right and left with the distal end 42a as a starting point. On the swivel frame 42, a swing cylinder 42b (refer to FIG. 3) for swinging the boom 31 is disposed.

The boom 31 has a shape bent at an obtuse angle, and turns in the up-down direction by expansion/contraction of the boom cylinder 31a. The boom cylinder 31a has a base end thereof supported by the distal end 42a of the upper swivel body 4, and a distal end thereof which is coupled to a bent portion of the boom 31 and which is movable in an expansion and contraction available manner. The arm 32 is coupled to the distal end of the boom 31 in a turnable manner. The arm 32 turns in the up-down direction by the expansion and contraction of the arm cylinder 32a. The arm cylinder 32a has a base end supported by the boom 31, and a distal end coupled to a base end of the arm 32 so as to be movable in the expansion/contraction available manner. The bucket 33 is coupled to a distal end of the arm 32 via a link mechanism 35 and turns in the up-down direction by expansion and contraction of the bucket cylinder 33a. The bucket cylinder 33a has a base end supported by the arm 32, and a distal end coupled to the link mechanism 35 so as to expand and contract.

The upper swivel body 4 is positioned on the lower traveling body 2 and is mounted so as to swivel with respect to the lower traveling body 2. In the upper swivel body 4, a driving section 41, the swivel frame 42, a swivel motor 43, a machine room 44 are disposed. The upper swivel body 4 swivels via a swivel bearing (not illustrated) when the swivel motor 43, which is a hydraulic motor, is driven.

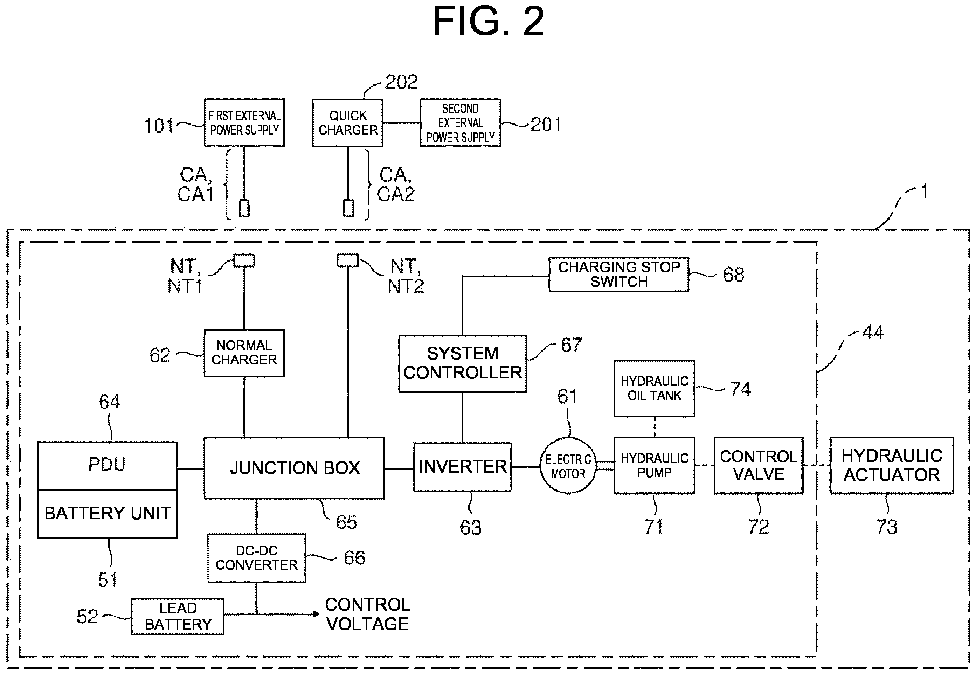

The driver's seat 41a is disposed in the driving section 41. An operation lever 41b for various operations is disposed near the driver's seat 41a. An operator sits on the driver's seat 41a and operates the operation lever 41b, so that a hydraulic actuator 73 (refer to FIG. 2), which will be described later, is driven. This enables the lower traveling body 2 to travel, enables the operating machine 3 to perform excavation work, and enables the upper swivel body 4 to swivel.

A battery unit 51 is disposed in the upper swivel body 4. The battery unit 51 is composed of, for example, a lithium-ion battery unit. The battery unit 51 stores electric power and supplies the electric power to an electric motor 61 (refer to FIG. 2) to drive the electric motor 61.

A lead battery 52 is also disposed in the upper swivel body 4. The lead battery 52 outputs a DC current of a low voltage (e.g., 12 V). The output from the lead battery 52 is supplied as a control voltage to, for example, a system controller 67 (refer to FIG. 2).

The hydraulic excavator 1 may have a configuration that uses a combination of a hydraulic device, such as a hydraulic actuator (for example, a hydraulic motor or a hydraulic cylinder), and an actuator driven by electric power. Examples of the actuator driven by electric power include an electric traveling motor, an electric cylinder, and an electric swivel motor.

### 2. Configuration of Electric System and Hydraulic System

FIG. 2 is a block diagram schematically illustrating a configuration of an electric system and a hydraulic system of the hydraulic excavator 1. For convenience, in this figure, paths through which current or an electric signal are supplied are illustrated as solid lines, and paths through which hydraulic fluid flows is illustrated as broken lines.

The hydraulic excavator 1 includes the electric motor 61, a normal charger 62, an inverter 63, a power distribution unit (PDU) 64, a junction box 65, a DC-DC converter 66, and the system controller 67 in the machine room 44. The system controller 67 is composed of an electronic control unit, also referred to as an ECU (Electronic Control Unit), and performs electric control on the individual components included in the hydraulic excavator 1.

The electric motor 61 is driven by electric power supplied from the battery unit 51 via the junction box 65 and the inverter 63. The electric motor 61 is composed of a permanent magnet motor or an induction motor.

The normal charger 62 (also referred to as a power feeder) converts an AC voltage supplied from a first external power supply 101 as an external power supply via a cable CA (in particular, a first cable CA1) into a DC voltage. A first connector NT1 serving as a connector NT is disposed inside the machine room 44. The first connector NT1 is a connector (also referred to as a socket) for normal charging.

By connecting the first cable CA1 to the first connector NT1, an AC voltage is supplied from the first external power supply 101 to the normal charger 62 via the first cable CA1 and the first connector NT1. A voltage (DC voltage) output from the normal charger 62 is supplied to the battery unit 51 via the junction box 65 and the PDU 64. Consequently, the battery unit 51 is charged. The charging of the battery unit 51 at this time is also referred to as normal charging.

A second connector NT2 serving as a connector NT is disposed inside the machine room 44. That is, the connectors NT includes the first connector NT1 and the second connector NT2. The second connector NT2 is a connector (socket) for quick charging. An AC voltage supplied from a second external power supply 201 for quick charging is converted to a DC voltage by a quick charger 202. A base end of a cable CA (in particular, a second cable CA2) is connected to the quick charger 202.

A distal end of the second cable CA2 is connected to the second connector NT2, so that a DC voltage is supplied from the quick charger 202 to the battery unit 51 via the second cable CA2, the second connector NT2, the junction box 65, and the PDU 64. Consequently, the battery unit 51 is charged. The charging of the battery unit 51 at this time is also referred to as quick charging.

Thus, the hydraulic excavator 1 serving as the work machine of this embodiment includes the connectors NT (first connector NT1 and second connector NT2) to which the cables CA (first cable CA1 and second cable CA2) for charging the battery unit 51, which is to supply power to the electric motor 61, are connected, respectively. Note that the arrangement positions of the connectors NT in the machine room 44 will be described below in detail. Furthermore, in this embodiment, wiring portions where an electric lines extend and plugs (portions to be inserted into the connectors NT) disposed at tip ends of the wiring portions are collectively referred to as the cables CA.

The inverter 63 converts a DC voltage supplied from the battery unit 51 into an AC voltage and supplies the AC voltage to the electric motor 61. Consequently, the electric motor 61 is rotated. The supply of the AC voltage (current) from the inverter 63 to the electric motor 61 is performed based on a rotation command output from the system controller 67.

The PDU 64 is a battery control unit that controls input and output of the battery unit 51 by controlling an internal battery relay. The junction box 65 includes a charger relay, an inverter relay, and fuses. A voltage output from the battery unit 51 is supplied to the inverter 63 via the PDU 64 and the junction box 65.

The DC-DC converter 66 steps down a DC voltage of a high voltage (e.g., 300 V) supplied from the battery unit 51 via the PDU 64 and the junction box 65 to a low voltage (e.g., 12 V). The voltage output from the DC-DC converter 66 is supplied to the system controller 67 and the like in the same manner as an output from the lead battery 52.

In the machine room 44, a charging stop switch 68 is disposed in the vicinity of the connectors NT. When charging of the battery unit 51 is completed, the operator operates (presses, for example) the charging stop switch 68 and then unplugs the cables CA from the connectors NT. When the charging stop switch 68 is operated, the system controller 67 controls the PDU 64 or the junction box 65 based on a stop signal supplied from the charging stop switch 68 to block a charging path to the battery unit 51. Consequently, the operator can safely unplug the cables CA from the connectors NT.

A plurality of hydraulic pumps 71 are connected to a rotation shaft (output shaft) of the electric motor 61. The plurality of hydraulic pumps 71 include variable displacement pumps and fixed displacement pumps. In FIG. 2, only one hydraulic pump 71 is illustrated as an example. Each of the hydraulic pumps 71 is connected to a hydraulic oil tank 74.

When the hydraulic pumps 71 are driven by the electric motor 61, hydraulic oil in the hydraulic oil tank 74 is supplied to the hydraulic actuator 73 via the control valve 72. Consequently, the hydraulic actuator 73 is driven. That is, the hydraulic oil tank 74 stores the hydraulic oil discharged by the hydraulic pumps 71 driven by the electric motor 61. The control valve 72 is a directional switching valve that controls a flow direction and a flow rate of the hydraulic oil to be supplied to the hydraulic actuator 73. The hydraulic actuator 73 includes hydraulic motors (e.g., the right and left traveling motors 22 and the swivel motor 43 in FIG. 1) and hydraulic cylinders (e.g., the boom cylinder 31a, the arm cylinder 32a, and the bucket cylinder 33a in FIG. 1).

### 3. Arrangement of Components in Machine Room

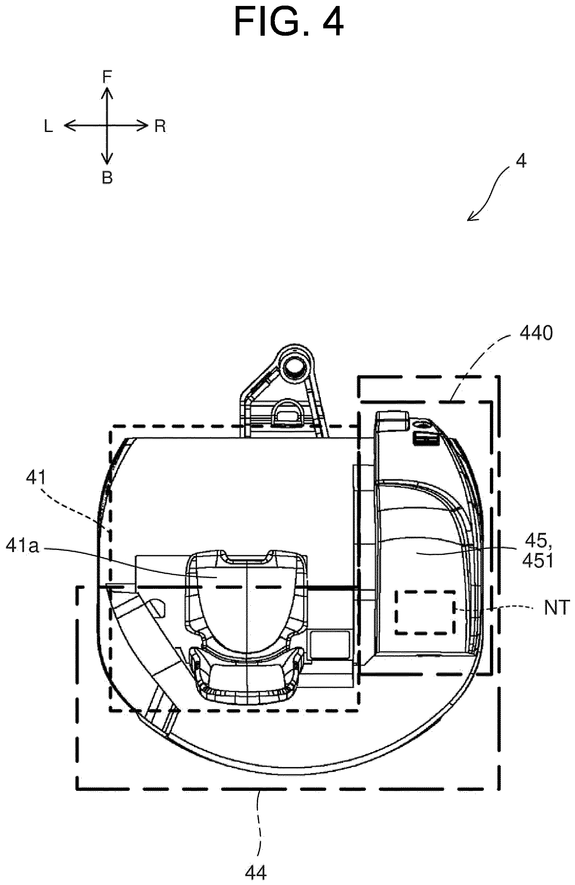

FIG. 3 is a perspective view of the upper swivel body 4. FIG. 4 is a plan view schematically illustrating the upper swivel body 4. In the upper swivel body 4, the driving section 41 is disposed to be shifted to a left side from a center in the width direction. Specifically, the driving section 41 is disposed on a first side (left side) in the width direction. The machine room 44 is disposed in a lower side, a right side, and a rear side of the driving section 41. Here, the lower side of the driving section 41 includes a lower side of the driver's seat 41a. The right side of the driving section 41 includes an immediate right portion of the driver's seat 41a. In this way, in the upper swivel body 4, the machine room 44 is disposed in at least a portion adjacent to a second side (right side) in the width direction relative to the driving section 41.

As illustrated in FIG. 4, the machine room 44 includes a connector accommodation section 440. The connector accommodation section 440 includes the connectors NT described below arranged therein. The connector accommodation section 440 is disposed on a right side with respect to the driving section 41, that is, the second side in the width direction. Therefore, the connectors NT are disposed on the right side with respect to the driving section 41, that is, the second side in the width direction in the machine room 44. Note that the connector accommodation section 440 may also accommodate components in addition to the connectors NT. In this embodiment, in addition to the connectors NT, the hydraulic oil tank 74, the lead battery 52 (both refer to FIG. 2), and the like are also accommodated in the connector accommodation section 440.

The machine room 44 has a cover 45. The cover 45 is disposed on a right side of the driving section 41 in an openable manner. In particular, the cover 45 has a turn shaft (not illustrated) at a rear end thereof. The turn shaft extends in the width direction. Therefore, the cover 45 turns in the up-down direction with the turn shaft as a fulcrum. When the cover 45 turns upward, the cover 45 is opened, and when the cover 45 turns downward, the cover 45 is closed. That is, the cover 45 turns to be opened forward.

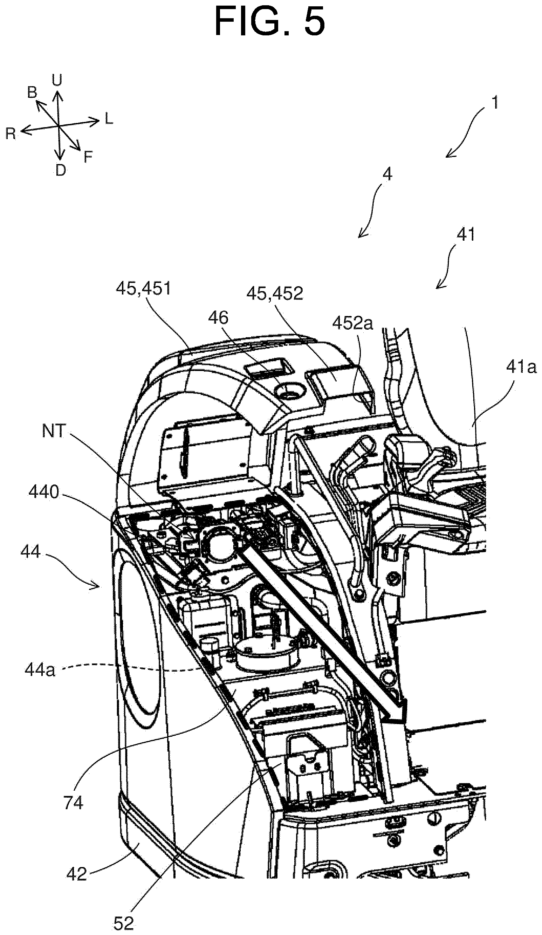

FIG. 5 is a perspective view of the upper swivel body 4 with the cover 45 opened. As illustrated in FIG. 5, when the cover 45 is opened, the connectors NT, the hydraulic oil tank 74, and the lead battery 52 which are arranged inside the machine room 44 (connector accommodation section 440, in particular) are exposed. That is, when the cover 45 is closed as illustrated in FIG. 3, the connectors NT, the hydraulic oil tank 74, and the lead battery 52 are located below the cover 45 in the machine room 44. Thus, the hydraulic excavator 1 has the machine room 44 that has the openable cover 45 and that includes the connectors NT inside thereof. Note that a white arrow in FIG. 5 indicates a direction in which the connectors NT face in the machine room 44. Therefore, the connectors NT face forward in the machine room 44 in this embodiment.

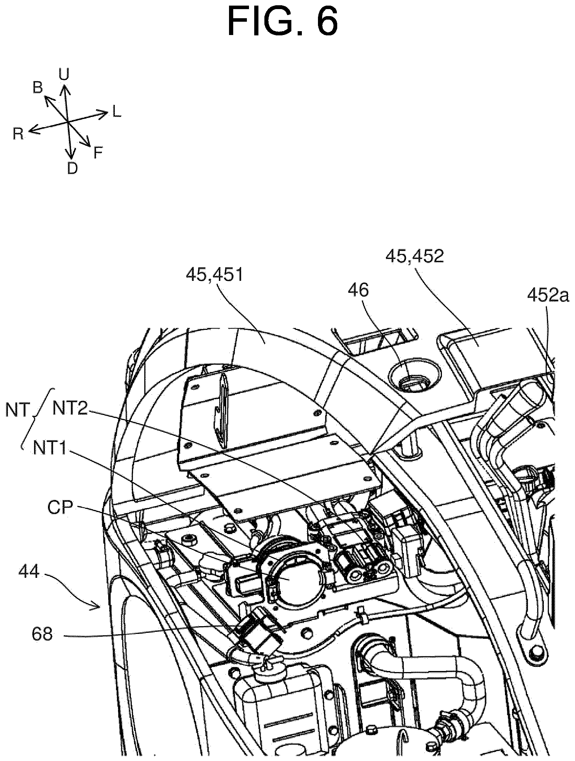

FIG. 6 is an enlarged perspective view illustrating the connectors NT in the machine room 44. As described above, the connectors NT include the first connector NT1 for normal charging and the second connector NT2 for quick charging. The first connector NT1 and the second connector NT2 are arranged in the width direction. In particular, the first connector NT1 is disposed on a right side of the second connector NT2, that is, on the second side in the width direction.

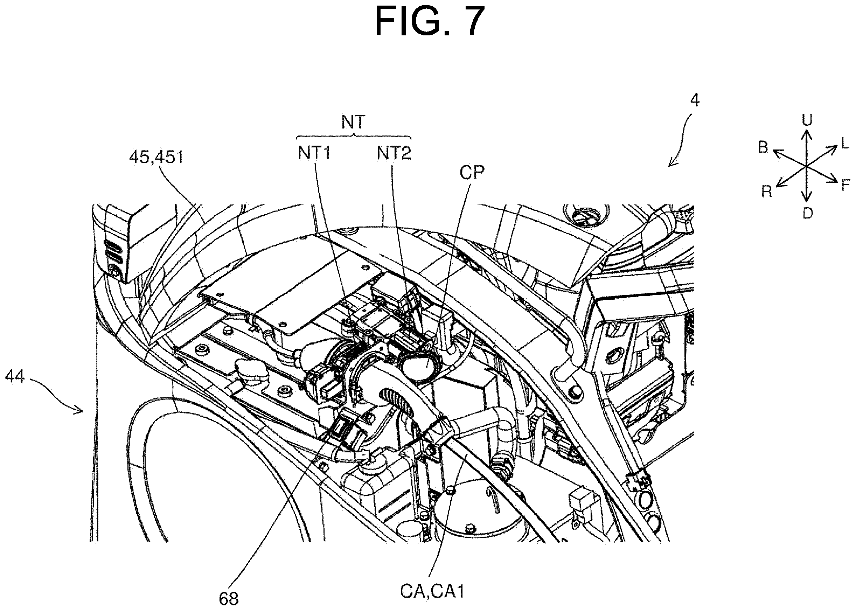

A cap CP is supported by the first connector NT1 in a turnable manner. The cap CP is provided to protect a connection port (insertion port) into which the first cable CA1 (refer to FIG. 7) for normal charging is inserted. A turn shaft of the cap CP extends in the up-down direction and is positioned on the left side of the machine body of the connection port. In a state in which the normal charging is not performed, the connection port is closed by the cap CP. The connection port is exposed when the cap CP is opened for the normal charging. Consequently, the first cable CA1 can be connected to the connection port of the first connector NT1. FIG. 7 is a diagram illustrating a state in which the cap CP is opened and the first cable CA1 is connected to the first connector NT1.

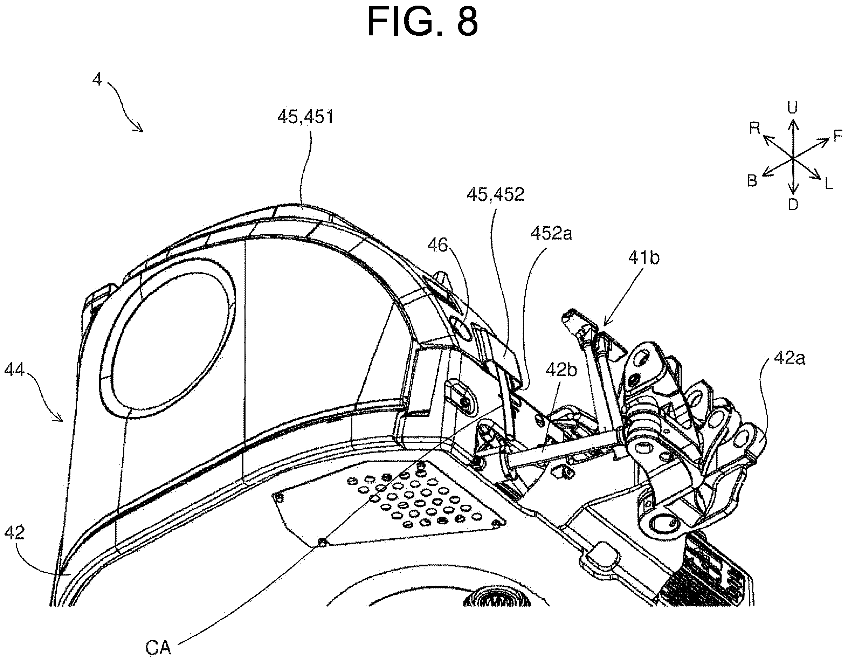

The operator closes the cover 45 after the first cable CA1 is connected to the first connector NT1. FIG. 8 is a perspective view of the upper swivel body 4 with the cover 45 closed viewed from a bottom. A communication port 452a is located on a front side of the cover 45. That is, the cover 45 has the communication port 452a. The communication port 452a is an opening through which the cables CA connected to the connectors NT in the machine room 44 pass. Note that the communication port 452a will be described in detail below.

The first cable CA1 connected to the first connector NT1 is drawn from the communication port 452a in a state in which the cover 45 is closed. The cover 45 has a key cylinder 46. The cover 45 may not be opened when a key is inserted into the key cylinder 46 to lock the cover 45 in a state in which the cover 45 is closed. Accordingly, a third party may not access the inside of the machine room 44 during the normal charging. Therefore, for example, it is possible to prevent a third party from tampering with the inside of the machine room 44 during charging.

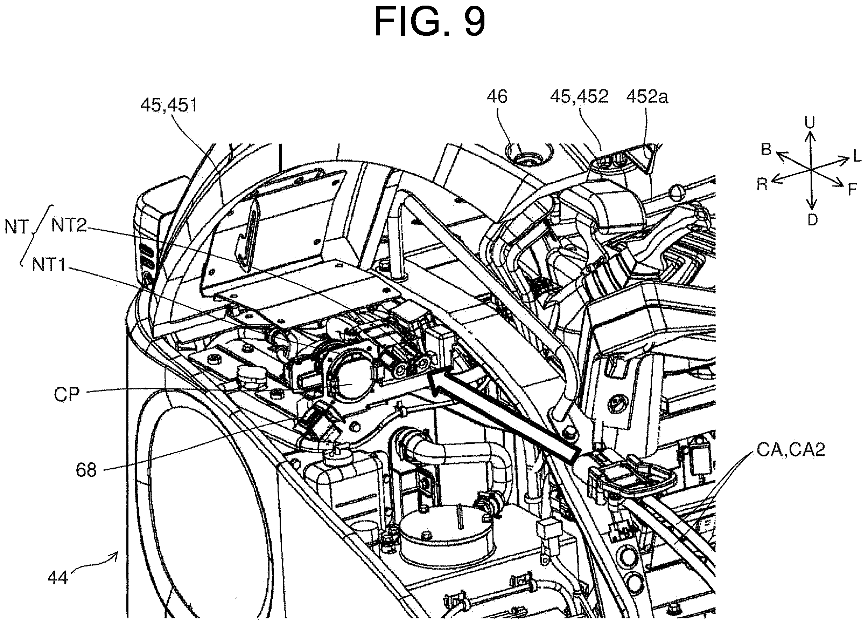

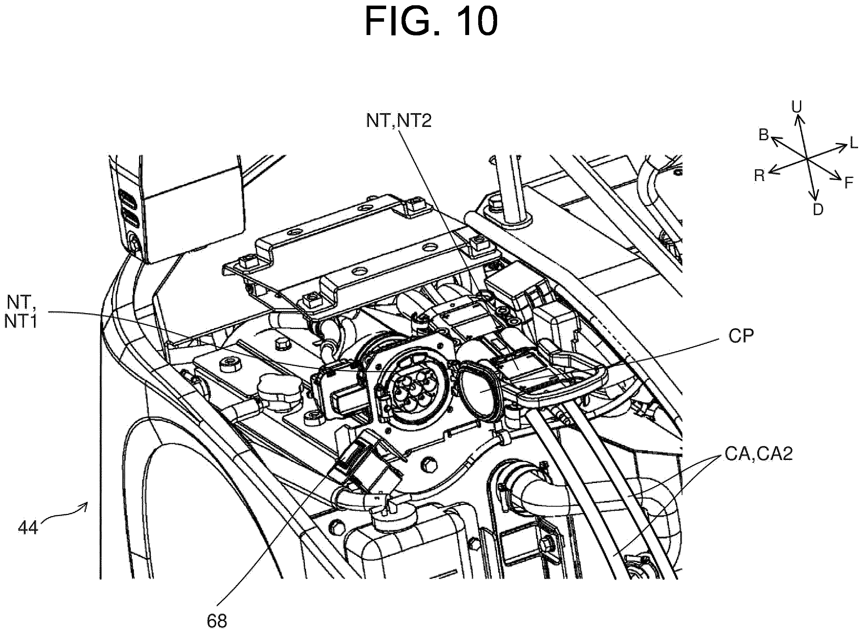

On the other hand, when quick charging is performed, as illustrated in FIG. 9, the cover 45 is opened and the second cable CA2 is inserted into the second connector NT2 while the cap CP of the first connector NT1 is closed. FIG. 10 is a diagram illustrating the state in which the second cable CA2 is connected to the second connector NT2. The operator closes the cover 45 after the second cable CA2 is connected to the second connector NT2. The second cable CA2 connected to the second connector NT2 is drawn from the communication port 452a (refer to FIG. 8) in the state in which the cover 45 is closed. Note that, although the configuration in which two lines are connected to one plug of the second cable CA2 is illustrated in FIGS. 9 and 10, the two lines may be combined into one line portion, and the one line portion may be connected to the plug to form the second cable CA2.

As described above, the machine room 44 incorporating the connectors NT inside thereof has the openable cover 45. With this configuration, the connectors NT disposed inside the machine room 44 can be exposed by opening the cover 45. Therefore, the battery unit 51 can be charged by connecting the cables CA for charging to the connectors NT. On the other hand, the connectors NT can be covered by the cover 45 for protection by closing the cover 45 of the machine room 44.

Furthermore, with the configuration in which the driving section 41 is disposed on the first side (left side, for example) in the width direction of the hydraulic excavator 1, the machine room 44 is disposed at least adjacent to the driving section 41 on the second side (right side, for example) in the width direction. With this configuration, inside the machine room 44, the connectors NT may be arranged adjacent to the driving section 41 on the second side in the width direction. Furthermore, since the machine room 44 is located on the second side in the width direction with respect to the driving section 41, the operator may not get on and off from the second side in the width direction with respect to the driving section 41, but gets on and off from the first side in the width direction. In this case, the side for the operator getting on or off the driving section 41 (the first side in the width direction) is opposite to the side for the arrangement of the connectors NT inside the machine room 44 (the second side in the width direction). Therefore, when the operator gets on or off the driving section 41 (from the first side in the width direction) while the cables CA are connected to the connectors NT for charging the battery unit 51 (on the second side in the width direction), the cables CA are less likely to disturb the operator getting on or off. Consequently, charging can be performed while the operator safely gets on and off the driving section 41.

The connectors NT are preferably disposed on the second side in the width direction with respect to the driving section 41 as illustrated in FIG. 4, in terms of the configuration in which the side where the operator gets on and off and the side where the connectors NT are arranged with respect to the driving section 41 are securely set opposite to each other in the width direction. In other words, the connector accommodation section 440 is preferably disposed on the second side in the width direction with respect to the driving section 41.

As illustrated in FIG. 5, the machine room 44 has an opening portion 44a. Note that, in FIG. 5, the opening portion 44a is indicated by a thick dashed line for the sake of convenience. The opening portion 44a has a shape smaller than an outer shape of the cover 45 and is covered with the cover 45. In this embodiment, the opening portion 44a is located at an upper right portion of the driving section 41 and extends obliquely downward from the rear to the front.

According to this embodiment, the connectors NT are disposed to face forward in the machine room 44 as described above. That is, directions of the first connector NT1 and the second connector NT2 (directions where the connection ports face) correspond to a direction across the opening portion 44a. With this arrangement of the connectors NT, the first cable CA1 can be connected to the first connector NT1 from the front so as to cross the opening portion 44a. Similarly, the second cable CA2 can be connected to the second connector NT2 from the front so as to cross the opening portion 44a.

The directions of the first connector NT1 and the second connector NT2 in the machine room 44 at least cross the opening portion 44a and are not limited to the front direction. For example, the first connector NT1 and the second connector NT2 may extend obliquely upward or obliquely downward with respect to the front.

Accordingly, the connectors NT are preferably disposed as below in the machine room 44, to attain a configuration in which the cables CA are inserted into the connectors NT through the opening portion 44a from an outside of the machine room 44 with the cover 45 being opened. That is, the connectors NT are preferably disposed to face an outside of the machine room 44 through the opening portion 44a when the cover 45 is opened.

Here, when the cables CA are drawn in the width direction of the hydraulic excavator 1 from the connectors NT during charging, for example, the cables CA may be brought into contact with an obstacle near the cables CA. In this embodiment, by connecting the cables CA to the connectors NT from the front side, the cables CA being charged can be drawn forward from the connectors NT. This reduces the risk for the cables CA of the contact on an obstacle located near (next to, in the width direction, in particular) the cables CA. The connectors NT are preferably disposed to face forward through the opening portion 44a when the cover 45 is opened, so that the configuration in which the cables CA are drawn forward is attained.

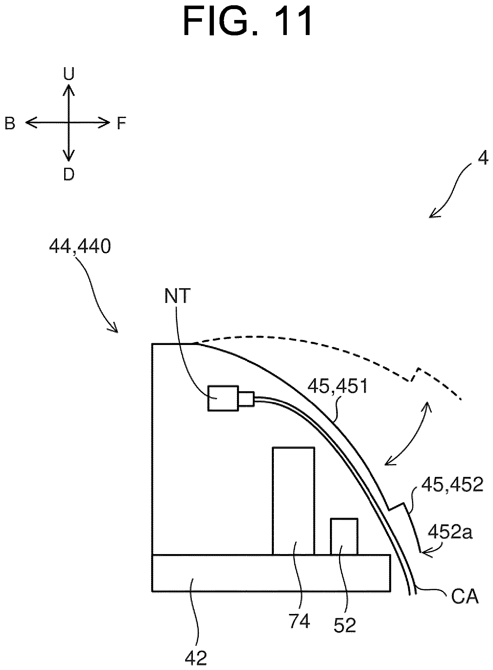

FIG. 11 is a side view schematically illustrating an internal configuration of the machine room 44 (connector accommodation section 440, in particular). Note that, in FIG. 11, a right wall (right hood) of the machine room 44 is omitted for the sake of convenience. The hydraulic oil tank 74 is disposed in the machine room 44. In this embodiment, the connectors NT are disposed in the machine room 44 so as to be shifted with respect to the hydraulic oil tank 74 in both the front-rear direction and the up-down direction. Specifically, in the machine room 44, the connectors NT are disposed on a rear side with respect to the hydraulic oil tank 74 and an upper side with respect to the hydraulic oil tank 74.

For example, when the connectors NT (first connector NT1 and second connector NT2) are disposed on an upper side of (immediately over) the hydraulic oil tank 74, maintenance of the hydraulic oil tank 74, such as supply of hydraulic oil, may become difficult due to the existence of the connectors NT. In particular, when a supply port of the hydraulic oil tank 74 is formed on an upper surface of the hydraulic oil tank 74, the aforementioned maintenance is a growing concern. To address the concern, as described in this embodiment, the connectors NT are preferably disposed so as to be shifted with respect to the hydraulic oil tank 74 in the front-rear direction in the machine room 44.

Furthermore, when the hydraulic oil tank 74 is disposed in front of (right in front of) the connectors NT, for example, the cables CA are difficult to be connected to the connectors NT from the front, and therefore, the design is required to be changed by changing directions of the connectors NT or the like. Even when the directions of the connectors NT are not changed by the design change, as described in this embodiment, the connectors NT and the hydraulic oil tank 74 are preferably disposed so as to be shifted from each other in the up-down direction in the machine room 44 to enable the connection to the cables CA.

It is preferable that an upper space of the hydraulic oil tank 74 is used as a space for arranging the cables CA connected to the connectors NT in addition to a working space for maintenance for supplying hydraulic oil to the hydraulic oil tank 74 in terms of efficient use of the space. To address the concern, as described in this embodiment, the connectors NT are preferably disposed on the rear side and the upper side of the hydraulic oil tank 74 in the machine room 44.

Note that, when the cables CA are connected to the connectors NT from the front, the cables CA pass over the hydraulic oil tank 74. However, since the cables CA are thin, the cables CA do not occupy the entire upper space of the hydraulic oil tank 74. Therefore, even when the cables CA pass over the hydraulic oil tank 74, an operation of supplying the hydraulic oil can be performed on the hydraulic oil tank 74 from above.

### 4. Communication Port of Cover

Next, the cover 45 and the communication port 452a will be described in detail with reference to FIGS. 3, 4, 5, 8, and 11. The cover 45 described above includes a cover main body 451 and a projecting portion 452. The cover main body 451 has a turn shaft extending in the right-left direction at a rear end thereof so as to turn in the up-down direction.

The cover main body 451 is disposed on the right side of the driving section 41 (refer to FIG. 3). In this embodiment, the driving section 41 is disposed on the first side (left side) in the width direction, and therefore, the cover main body 451 can be disposed on the second side (right side) in the width direction with respect to the driving section 41. The cover main body 451 has a curved shape in which a front side thereof hangs down with respect to a rear side thereof in a closed state (refer to FIGS. 3 and 11).

The projecting portion 452 is a portion of the cover main body 451 which is recessed to an outer side of the cover so as to be projected to the outer side of the cover. Here, the outer side of the cover refers to a side opposite to an inner side (a side on which the connectors NT and the like are arranged) of the machine room 44 with respect to the cover main body 451, that is, an outer side of the machine room 44. The projecting portion 452 is positioned at a front lower portion of the cover main body 451 in the closed state illustrated in FIG. 3, and has the above-described communication port 452a at a lower end thereof. Therefore, the communication port 452a is positioned on the front side of the connectors NT in the machine room 44 in the closed state of the cover 45.

Since the communication port 452a is positioned on the front side with respect to the connectors NT in the closed state of the cover 45, the cables CA connected to the connectors NT can be drawn out to the front side through the communication port 452a even when the cover 45 is closed at a time of charging of the battery unit 51 (refer to FIG. 2). Accordingly, the risk for the cables CA of the contact on an obstacle located near the cables CA is reduced.

As illustrated in FIGS. 3 and 11, the communication port 452a is positioned on the lower side with respect to the connectors NT in the closed state of the cover 45. At the time of charging, the cables CA connected to the connectors NT hang down by weights of themselves. Since the communication port 452a is positioned on the lower side with respect to the connectors NT, the cables CA can be easily drawn out via the communication port 452a according to the gravity.

As illustrated in FIG. 8, the communication port 452a opens downward in the closed state of the cover 45. Specifically, an upper side of the communication port 452a is covered with a wall portion of the projecting portion 452, a lower side of the communication port 452a is an open space, and the communication port 452a is opened toward this open space. With this configuration, entry of rainwater or the like into the machine room 44 through the communication port 452a is suppressed. Furthermore, at the time of charging, the cables CA drawn out forward from the connectors NT and hanging downward are drawn out from the communication port 452a in the same direction. In this case, for example, loads applied to the cables CA are reduced and damage to the cables CA is also reduced as compared with a case where the cables CA are bent in the right-left direction and drawn out.

In this way, to securely realize the configuration in which the communication port 452a opens downward, as described in this embodiment, the projecting portion 452 is preferably located on the front lower portion of the cover main body 451 and preferably has the communication port 452a at the lower end thereof.

### 5. Arrangement of Connectors and Charging Stop Switch

Next, the arrangement of the connectors NT in the machine room 44 will be described below in detail. As illustrated in FIG. 6, in the machine room 44, the first connector NT1 for normal charging is disposed, and in addition, the second connector NT2 for quick charging is disposed side by side to the first connector NT1. In this embodiment, the first connector NT1 and the second connector NT2 are arranged side by side in the right-left direction (width direction).

In particular, the first connector NT1 is disposed on the right side of the second connector NT2, that is, on the second side in the width direction. This is because, in a normal use state of the first connector NT1, the turn shaft of the cap CP extending in the up-down direction is positioned on the first side (left side of the machine body) in the width direction with respect to the connection port of the first connector NT 1, and the cap CP is utilized as means for blocking not only the front of the first connector NT1 but also the front of the second connector NT2 as described below. Note that, in the configuration in which the turn shaft, extending in the up-down direction, of the cap CP of the first connector NT1 is positioned on the second side (right side of the machine body) in the width direction with respect to the connection port of the first connector NT1, the first connector NT1 is disposed on the left side of the second connector NT2, that is, on the first side in the width direction.

As described above, the first cable CA1 for charging the battery unit 51 (normal charging) is connected to the first connector NT1. The second cable CA2 for charging the battery unit 51 (quick charging) is connected to the second connector NT2. That is, the cables CA include the first cable CA1 connected to the first connector NT1 and the second cable CA2 connected to the second connector NT2.

When the normal charging is performed, as illustrated in FIG. 7, the cap CP of the first connector NT1 is opened and the first cable CA1 is connected to the first connector NT1. At this time, the opened cap CP is positioned in front of the second connector NT2. Therefore, insertion of the second cable CA2 into the second connector NT2 is physically impossible.

On the other hand, when the quick charging is performed, as illustrated in FIGS. 9 and 10, the second cable CA2 is connected to the second connector NT2 while the cap CP of the first connector NT1 is closed. When the cap CP of the first connector NT1 is opened in the state in which the second cable CA2 is connected to the second connector NT2, the cap CP is brought in contact with the second cable CA2 (refer to FIG. 10). Therefore, a distal end (plug) of the first cable CA1 is brought in contact with the cap CP when the first cable CA1 is to be inserted into the first connector NT1, and therefore, the first cable CA1 may not be inserted into the first connector NT1.

That is, in the state in which the second cable CA2 is inserted into the second connector NT2, the cap CP is not sufficiently opened to a position for enabling the insertion of the first cable CA1 into the first connector NT1 due to the presence of the second cable CA2. Therefore, the cap CP disturbs the insertion of the first cable CA1, and accordingly, the insertion of the first cable CA1 into the first connector NT1 is physically impossible.

As described above, to avoid simultaneous connection of the two types of cable CA into the respective connectors NT for safety with a simple structure for freely turning the cap CP, that is, to avoid simultaneous connection of the first cable CA1 and the second cable CA2 into the first connector NT1 and the second connector NT2, respectively, the following configuration is preferably employed. That is, it is preferable that the cap CP turns to a position (for example, the position illustrated in FIG. 7) crossing the front of the second connector NT2 when the first cable CA1 is connected to the first connector NT1, and turns to a position (for example, the closed position illustrated in FIG. 9) crossing the front of the first connector NT1 when the second cable CA2 is connected to the second connector NT2.

To easily avoid the simultaneous connection of the two types of cable CA to the connectors NT by the simple structure in which the turn position of the cap CP is switched between the position crossing the front of the second connector NT2 and the position crossing the front of the first connector NT1, the first connector NT1 having the cap CP and the second connector NT2 are preferably arranged side by side in the width direction.

Furthermore, when the first connector NT1 and the second connector NT2 are arranged side by side in the width direction, the second cable CA2 may be connected to the second connector NT2 in the same direction (from the front, for example) as the direction in which the first cable CA1 is connected to the first connector NT1. Consequently, layout of the second cable CA2 can be made similarly to the first cable CA1. For example, at the time of charging using the second cable CA2, the second cable CA2 can be drawn out of the cover 45 through the communication port 452a used when the first cable CA1 is inserted. Thus, it is no longer necessary to provide a dedicated communication port for drawing the second cable CA2 out of the cover 45.

In the hydraulic excavator 1 that performs the normal charging and the quick charging, to avoid the simultaneous connection of the two types of cable CA, the first connector NT1 is preferably a connector for the normal charging connected to a cable for the normal charging as the first cable CA1 and the second connector NT2 is preferably a connector for the quick charging connected to a cable for the quick charging as the second cable CA2.

As illustrated in FIGS. 6, 7, 9, and 10, a charging stop switch 68 is disposed inside the machine room 44. The charging stop switch 68 is an operation receiver that receives an operation of stopping charging of the battery unit 51 (refer to FIG. 2 and the like). The charging stop switch 68 is disposed on the right side with respect to the first connector NT1 and the second connector NT2, that is, on the second side in the width direction.

With this arrangement of the charging stop switch 68, the operator can easily perform a charging stop operation by accessing the charging stop switch 68 from the second side in the width direction, for example. Furthermore, since the charging stop switch 68 is disposed near the first connector NT1 and the second connector NT2, for example, when the first connector NT1 has an interlock mechanism, the charging stop switch 68 can be provided with a function of an interlock release switch. Note that the interlock mechanism refers to a structure in which an interlock is engaged and a cable connected to a connector does not come off unless a lock release switch is pressed.

### 6. Modification

Although the example in which the configuration for avoiding the simultaneous connection of the two types of cable CA described above is applied to the configuration in which the connectors NT are located on the right side of the driving section 41 in the machine room 44 is described in this embodiment, the application is not limited to this. That is, the configuration for avoiding the simultaneous connection of the two types of cable CA according to this embodiment may be applied, even when the connectors NT are located on a side other than the right side of the driving section 41.

Accordingly, the hydraulic excavator 1 serving as the work machine described in this embodiment may be configured as follows as a modification. That is, the hydraulic excavator 1 includes the first connector NT1 connected to the first cable CA1 for charging electric power to the battery unit 51 serving as a power source of the electric motor 61 from the outside, the second connector NT2 arranged side by side to the first connector NT1 and connected to the second cable CA2 for charging electric power to the battery unit 51 from the outside, and the cap CP that is supported by the first connector NT1 in a turnable manner and that covers the end portion of the second connector NT2 in an openable and closable manner. When the second cable CA2 is connected to the second connector NT2, the cap CP disturbs connection between the first connector NT1 and the first cable CA1, whereas when the first cable CA1 is connected to the first connector NT1, the cap CP disturbs connection between the second connector NT2 and the second cable CA2.

Furthermore, in the hydraulic excavator 1 of the modification described above, the first connector NT1 and the second connector NT2 are preferably arranged side by side in a right-left direction.

### 7. Supplemental Description

In the above description, the hydraulic excavator 1 which is a construction machine is described as an example of an electric work machine. However, the work machine is not limited to the hydraulic excavator 1, but may also be other construction machine, such as a wheel loader and a compact truck loader. Moreover, the work machine may be an agricultural machine, such as a combine harvester and a tractor.

### 8. Appendices

The hydraulic excavator 1 described in this embodiment can also be expressed as the following appendices.

A work machine according to Appendix 1 that has connectors connected to cables for charging a battery unit for supplying electric power to an electric motor, includes:
a driving section that is disposed on a first side in a width direction; and
a machine room that has an openable cover and that incorporates the connectors, wherein
the machine room is at least disposed adjacent to the driving section on a second side in the width direction.

According to a work machine of Appendix 2, in the work machine described in Appendix 1,
the machine room includes a connector accommodation section in which the connectors are disposed, and
the connector accommodation section is disposed on the second side in the width direction with respect to the driving section.

According to a work machine of Appendix 3, in the work machine described in Appendix 1 or 2,
the machine room has an opening portion covered by the cover, and
the connectors are disposed to face an outside of the machine room through the opening portion when the cover is opened.

According to a work machine of Appendix 4, in the work machine described in Appendix 3,
a hydraulic oil tank that is disposed inside the machine room and that stores hydraulic oil to be discharged by a hydraulic pump driven by the electric motor is further provided, and
the connectors are disposed to be shifted from the hydraulic oil tank in a front-rear direction.

According to a work machine of Appendix 5, in the work machine described in Appendix 4,
the connectors are disposed to be shifted from the hydraulic oil tank in an up-down direction.

According to a work machine of Appendix 6, in the work machine described in Appendix 5,
the connectors are disposed on a rear side and an upper side with respect to the hydraulic oil tank.

According to a work machine of Appendix 7, in the work machine described in any one of Appendices 3 to 6,
the connectors are disposed to face forward (through the opening portion when the cover is opened).

According to a work machine of Appendix 8, in the work machine described in Appendix 7,
the cover has a communication port through which the cables connected to the connectors pass, and
the communication port is located on a front side with respect to the connectors in a state in which the cover is closed.

According to a work machine of Appendix 9, in the work machine described in Appendix 8,
the communication port is located on a lower side with respect to the connectors in the state in which the cover is closed.

According to a work machine of Appendix 10, in the work machine described in Appendix 9, the communication port is opened downward in the state in which the cover is closed.

According to a work machine of Appendix 11, in the work machine described in any one of Appendices 8 to 10,
the cover has
   a cover main body disposed on the second side in the width direction with respect to the driving section, and
   a projecting portion formed by a portion of the cover main body projecting to an outside of the cover,
the cover main body has a curved shape in which a front side of the cover main body hangs down with respect to a rear side in the closed state, and
the projecting portion is positioned at a front lower portion of the cover main body in the closed state and has the communication port at a lower end.

According to a work machine of Appendix 12, in the work machine described in any one of claim 1 to claim 11,
the connectors include a first connector and a second connector,
the cables include a first cable connected to the first connector and a second cable connected to the second connector,
the first connector and the second connector are arranged side by side in the machine room,
the first connector has a cap supported in a turnable manner, and
the cap turns to a position crossing a front of the second connector when the first cable is connected to the first connector, and turns to a position crossing a front of the first connector when the second cable is connected to the second connector.

According to a work machine of Appendix 13, in the work machine described in Appendix 12, the first connector and the second connector are arranged side by side in the width direction.

According to a work machine of Appendix 14, in the work machine described in Appendix 12 or 13,
a charging stop switch that is disposed inside the machine room and that receives an operation of stopping charging of the battery unit is further provided, and
the charging stop switch is disposed on the second side in the width direction with respect to the first connector and the second connector.

According to a work machine of Appendix 15, in the work machine described in any one of Appendices 12 to 14,
the first connector is a connector for normal charging connected to a cable for normal charging as the first cable, and
the second connector is a connector for quick charging connected to a cable for quick charging as the second cable.

Although the embodiments of the present invention have been described above, the scope of the present invention is not limited thereto, and can be expanded or modified without departing from the gist of the invention.

### INDUSTRIAL APPLICABILITY

The present invention can be used for a work machine, such as a construction machine or an agricultural machine.

### REFERENCE SIGNS LIST

1 Hydraulic excavator (work machine)
41 Driving section
44 Machine room
44a: Opening portion
45 Cover
51 Battery unit
61 Electric motor
68 Charging stop switch
74 Hydraulic oil tank
71 Hydraulic pump
440 Connector accommodation section
451 Cover main body
452 Projecting portion
452a Communication port
CA Cable
CA1 First cable
CA2 Second cable
CP Cap
NT Connector
NT1 First connector
NT2 Second connector

## Claims

1. A work machine that includes connectors connected to cables for charging a battery unit for supplying electric power to an electric motor, the work machine comprising:
a driving section that is disposed on a first side in a width direction; and
a machine room that has an openable cover and that incorporates the connectors, wherein
the machine room is at least disposed adjacent to the driving section on a second side in the width direction.

2. The work machine according to claim 1, wherein
the machine room includes a connector accommodation section in which the connectors are disposed, and
the connector accommodation section is disposed on the second side in the width direction with respect to the driving section.

3. The work machine according to claim 1, wherein
the machine room has an opening portion covered by the cover, and
the connectors are disposed to face an outside of the machine room through the opening portion when the cover is opened.

4. The work machine according to claim 3, further comprising:
a hydraulic oil tank that is disposed inside the machine room and that stores hydraulic oil to be discharged by a hydraulic pump driven by the electric motor, wherein
the connectors are disposed to be shifted from the hydraulic oil tank in a front-rear direction.

5. The work machine according to claim 4, wherein the connectors are disposed to be shifted from the hydraulic oil tank in an up-down direction.

6. The work machine according to claim 5, wherein the connectors are disposed on a rear side and an upper side with respect to the hydraulic oil tank.

7. The work machine according to claim 3, wherein the connectors are disposed to face forward.

8. The work machine according to claim 7, wherein
the cover has a communication port through which the cables connected to the connectors pass, and
the communication port is located on a front side with respect to the connectors in a state in which the cover is closed.

9. The work machine according to claim 8, wherein the communication port is located on a lower side with respect to the connectors in the state in which the cover is closed.

10. The work machine according to claim 9, wherein the communication port is opened downward in the state in which the cover is closed.

11. The work machine according to claim 8, wherein
the cover has
a cover main body disposed on the second side in the width direction with respect to the driving section, and
a projecting portion formed by a portion of the cover main body projecting to an outside of the cover,
the cover main body has a curved shape in which a front side of the cover main body hangs down with respect to a rear side in a closed state, and
the projecting portion is positioned at a front lower portion of the cover main body in the closed state and has the communication port at a lower end.

12. The work machine according to any one of claim 1 to claim 11, wherein
the connectors include a first connector and a second connector, the cables include a first cable connected to the first connector and a second cable connected to the second connector,
the first connector and the second connector are arranged side by side in the machine room,
the first connector has a cap supported in a turnable manner, and
the cap turns to a position crossing a front of the second connector when the first cable is connected to the first connector, and turns to a position crossing a front of the first connector when the second cable is connected to the second connector.

13. The work machine according to claim 12, wherein the first connector and the second connector are arranged side by side in the width direction.

14. The work machine according to claim 12, further comprising:
a charging stop switch that is disposed inside the machine room and that receives an operation of stopping charging of the battery unit, wherein
the charging stop switch is disposed on the second side in the width direction with respect to the first connector and the second connector.

15. The work machine according to claim 12, wherein
the first connector is a connector for normal charging connected to a cable for normal charging as the first cable, and
the second connector is a connector for quick charging connected to a cable for quick charging as the second cable.
